# EUROPEAN PATENT APPLICATION

(11) **EP 2 787 445 A1**
(43) Date of publication of application: **08.10.2014**
(21) Application number: 11876838.1
(22) Date of filing: 02.12.2011
(51) Int. Cl.: G06F 12/00, G06F 3/06

(54) **INFORMATION PROCESSING DEVICE AND PROGRAM**

(30) Priority: 30.11.2011 JP 2011261773
(71) Applicant: Media Logic Corp., Toyama 939-1119 (JP)
(72) Inventor: URA Tamaki, Takaoka-shi Toyama 939-1119 (JP); TOYODA Mitsuru, Takaoka-shi Toyama 939-1119 (JP); KAMII Hideyuki, Takaoka-shi Toyama 939-1119 (JP)
(74) Representative: Peter, Julian
(86) International application number: PCT/JP2011/077894
(87) International publication number: WO 2013/080368

(57) **Abstract**

Provided is an information processing apparatus capable of reducing time required for a move or copy of a file. The information processing apparatus includes a resident module (72) that, when detecting a selection operation of a move source or a copy source of data from an OS 70, reads target data, and starts writing the data into a predetermined area. Then, the resident module (72), in a case in which a specification operation of a move destination or copy destination of the data is performed from the OS 70, moves the data from the predetermined area in a volume same as the move destination or copy destination of data to the move destination or copy destination of data. A data move within the same volume can be realized only by rewriting a management region of a file system, needs to perform no new write processes, and takes no additional time.

## Description

### Technical Field

The present invention relates to an information processing apparatus and a program for performing a move or copy of data.

### Background Art

In recent years, in information processing apparatuses such as personal computers (hereinafter will be referred to as PC), the move or copy of data has been performed in many cases. Methods of assisting the move or copy of data include a method disclosed in Patent Literature 1, for example.

In the method disclosed in Patent Literature 1, when a 'copy' command is executed once, content copied to a clipboard is kept stored, so that target data can be selected to be "pasted" among data on which the 'copy' command was executed in the past.

### Citation List

### Patent Literature

Patent Literature 1 : Japanese Patent Laid-Open publication No. 2001-243483

### Summary of Invention

### Technical Problem

On the other hand, in PCs, there are some cases in which a move or copy of a file is performed among a plurality of different volumes such as a volume of an internal drive and a volume of an external drive. In such cases, a process of writing a file into the volume of a move destination or a copy destination is executed. Alternatively, even when a file is copied into the same volume, a process of writing the file into the volume is executed. Therefore, it takes write processing time according to write performance with respect to the volume of a write destination.

Thus, it is an object of the present invention to provide an information processing apparatus and a program capable of reducing time required for a move or copy of a file.

### Solution to Problem

An information processing apparatus according to the present invention includes: a control unit that reads data from a storage device and controls writing of data into the storage device; and a reception unit that receives an operation of a user, and the control unit, before a timing at which the reception unit receives an operation for specifying a move destination of data or a copy destination of data, reads the data and performs a preliminary write process of writing the data into a predetermined area.

The control unit, for example, at a time when an operation (execution of a "cut" command, a keyboard input of CTRL+X, and the like in Windows (registered trademark), for example) of specifying a move source of a file or an operation (execution of a "copy" command, a keyboard input of CTRL+C, and the like, for example) of specifying a copy source of a file is performed, reads a target file and starts the preliminary write process of writing the file into a predetermined area. Additionally, the control unit, for example, in a case in which a move or copy of a file can be predicted, such as a case in which a user performs an operation of selecting a file in file operation application software, may preferably read the file at the stage and start the preliminary write process of writing the file into a predetermined area. Moreover, the control unit, at a time when a directory (folder) in which a file of a move source or a copy source is present is selected, may preferably read a file included in the directory (folder) and start the preliminary write process of writing the file into a predetermined area. In this way, before a user performs an operation for specifying a move destination or a copy destination of a file, by performing the preliminary write process of writing the file into a predetermined area, the waiting time of the user can be reduced.

The control unit, when the operation (the execution of a "paste" command, the keyboard input of CTRL+V, and the like) of specifying a move destination or a copy destination of a file is actually performed, moves the file that has been written in the preliminary write process from the predetermined area of the volume the same as the volume of the move destination or the copy destination of the file to the move destination or the copy destination of the file. A file move within the same volume can be realized only by rewriting a management region of a file system, needs to perform no new file write processes, and takes no additional time.

It is to be noted that a predetermined area, when the number of volumes is one, is another directory (folder) within the same volume. When two or more volumes are present, a predetermined area may be provided in a volume different from the volume in which the file of the move source or the copy source is present or may be in any one or all of the volumes including the volume in which the file of the move source or the copy source is present.

It should also be noted that, supposedly, in a case in which a predetermined area is not set in the volume the same as the volume of the move destination or the copy destination of the file but is provided in the volume different from the volume of the move destination or the copy destination of the file, the file that has already been written in the preliminary write process may preferably be moved to an area specified as a move destination or a copy destination of a file. In a case in which read performance with respect to the volume of the move source or the copy source of a file is low, and read performance with respect to the volume in which a predetermined area is provided is high, a volume with higher-speed read performance can also be set as a read source, so that, even when a predetermined area is provided in a volume different from the volume of the move destination or the copy destination of a file, time required for a move or copy of a file can be reduced.

### Advantageous Effects of Invention

According to the present invention, time required for a move or copy of a file can be reduced.

### Brief Description of the Drawings

FIG. 1 is a block diagram illustrating a hardware configuration of an information processing apparatus.
FIG. 2 is a functional block diagram illustrating a software configuration of the information processing apparatus.
FIG. 3 is a flowchart illustrating an operation performed by a resident module.
FIG. 4 is a flowchart illustrating an operation performed by the resident module (continuation of FIG. 3).
FIG. 5 is a flowchart illustrating an operation performed by a file copy module.

### Description of Embodiments

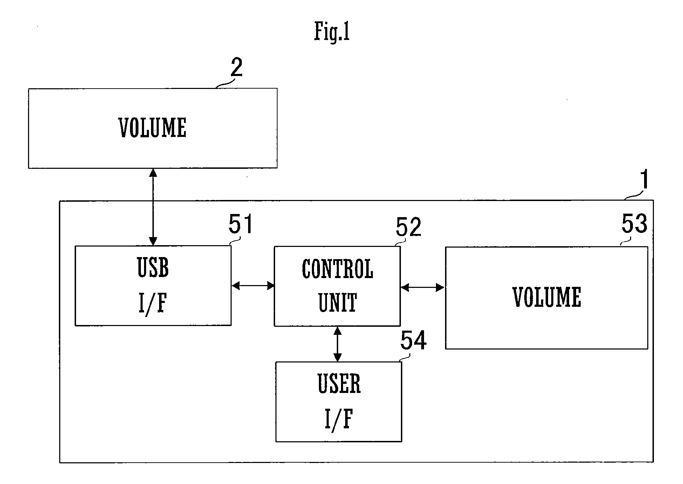

FIG. 1 is a block diagram illustrating a hardware configuration according to a preferred embodiment of the present invention. The preferred embodiment of the present invention includes a PC 1 and a volume 2 of an external drive.

The PC 1 is equipped with a USB interface (I/F) 51, a control unit 52, a volume 53 of an internal drive, and a user I/F 54. The external drive of the volume 2 is connected with the PC 1 through the USB I/F 51. The external drive of the volume 2 is a readable and writable storage device such as an HDD, an SSD, or a DVD-RAM. The internal drive of the volume 53 is a storage device such as an HDD or an SSD.

The control unit 52 includes a built-in memory such as a CPU and a memory (RAM), reads a program stored in the volume 53 of the internal drive, and performs various operations by executing the program in the built-in memory. In the preferred embodiment of the present invention, a description is given of a case in which Windows (registered trademark) is used as an OS of the PC 1.

The control unit 52 realizes a reception unit according to the present invention by receiving a user operation through the user I/F 54 that includes a mouse or a keyboard. The control unit 52, according to an operation received from a user, performs a process of reading a file from the volume 53 of the internal drive and writing the file into the volume 2 of the external drive, or a process of reading a file from the volume 2 of the external drive and writing the file into the volume 53 of the internal drive.

In general, the write processes are started at a time when a user executes a "cut" command of a file, inputs CTRL+X, executes a "copy" command, or inputs CTRL+C, and then executes a "paste" command or inputs CTRL+V. Alternatively, the write processes are started at a time when a user performs a drag operation of a file and completes a drop operation. For this reason, from start to completion of the write processes, the processing time according to the performance of the volume 2 of the external drive or the volume 53 of the internal drive will be required.

The preferred embodiment of the present invention can reduce the waiting time of a user in such a move or copy of a file.

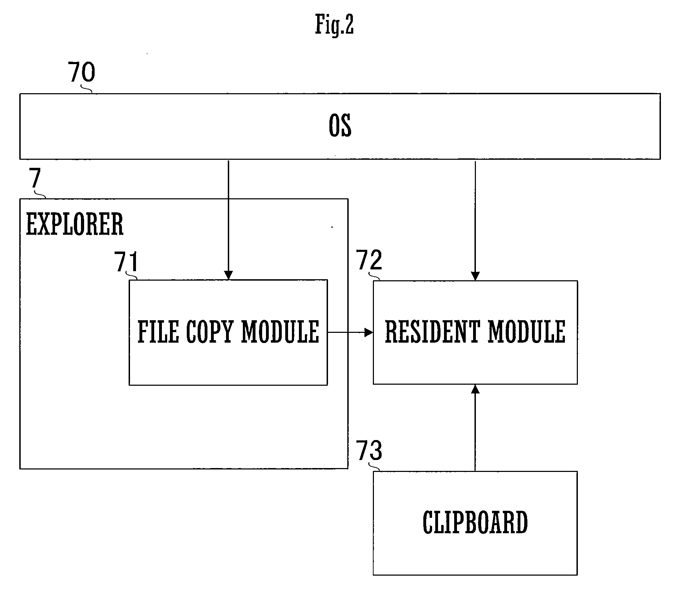

FIG. 2 is a functional block diagram illustrating a software configuration according to the preferred embodiment of the present invention. As illustrated in FIG. 2, the preferred embodiment of the present invention is equipped with: an OS 70, Explorer 7 as an application program provided in Windows (registered trademark) as a standard, a file copy module 71 of a plug-in (shell extension) of Explorer 7, a resident module 72, and a clipboard 73 that is provided in Windows (registered trademark) as a standard and is set as a shared memory region in which data can be temporarily saved in the PC 1.

In the preferred embodiment of the present invention, the file copy module 71, while being implemented as a plug-in (shell extension) of Explorer 7, may be implemented in other forms such as a dedicated application program.

The file copy module 71 and the resident module 72 detect a drag operation and a drop operation of a file from the OS 70 through an interface such as API.

The resident module 72 also monitors the clipboard 73 periodically (every one second, for example). The resident module 72, in the case in which the execution of a "cut" command of a file, the keyboard input of CTRL+X, the execution of a "copy" command, or the keyboard input of CTRL+C is performed, can acquire in the clipboard 73 a storage location (file path) of the file. The resident module 72, in a case in which a file path of the clipboard 73 is updated, determines that the execution of a "cut" command of the above mentioned file, the keyboard input of CTRL+X, the execution of a "copy" command, or the keyboard input of CTRL+C has been performed.

Hereinafter, in the preferred embodiment of the present invention, a specification operation of a move source or a copy source of a file will be referred to as a "copy source specification process". In addition, a specification operation of a move destination or a copy destination of a file will be referred to as a "file copy start process". It is to be noted that the copy source specification process includes the execution of a "cut" command, the keyboard input of CTRL+X, the execution of a "copy" command, the keyboard input of CTRL+C, or a drag operation. The file copy start process includes the execution of a "paste" command, the keyboard input of CTRL+V, or a drop operation.

The resident module 72, when detecting the copy source specification process, reads the file and performs a preliminary write process of writing the file into a predetermined area. In FIG. 1, the resident module 72, with respect to a file stored in the volume 53 of the internal drive, for example, when detecting the copy source specification process, copies the file to a specific folder (temporary folder that the resident module 72 has previously created, for example) of the volume 2 of the external drive. Alternatively, the resident module 72, with respect to a file stored in the volume 2 of the external drive, when detecting the copy source specification process, copies the file to a specific folder (temporary folder that the resident module 72 has previously created, for example) of the volume 53 of the internal drive.

In other words, the resident module 72 according to the preferred embodiment of the present invention, when detecting the copy source specification process, performs a copy process that is normally started at a time when a file copy start process is performed. Accordingly, before the file copy start process is performed, the file has already been copied to the volume 2 of the external drive. Alternatively, the file has already been copied to the volume 53 of the internal drive.

Then, when the file copy start process is performed, the resident module 72 moves a file that has been copied to a temporary folder to a move destination or a copy destination of the file copy start process. Such a file move within the same volume can be realized only by rewriting of a management region of a file system and needs to perform no new file write processes in the volume 2 of the external drive, or the volume 53 of the internal drive. Consequently, when the file copy start process is performed, the process of copying a file will be completed immediately.

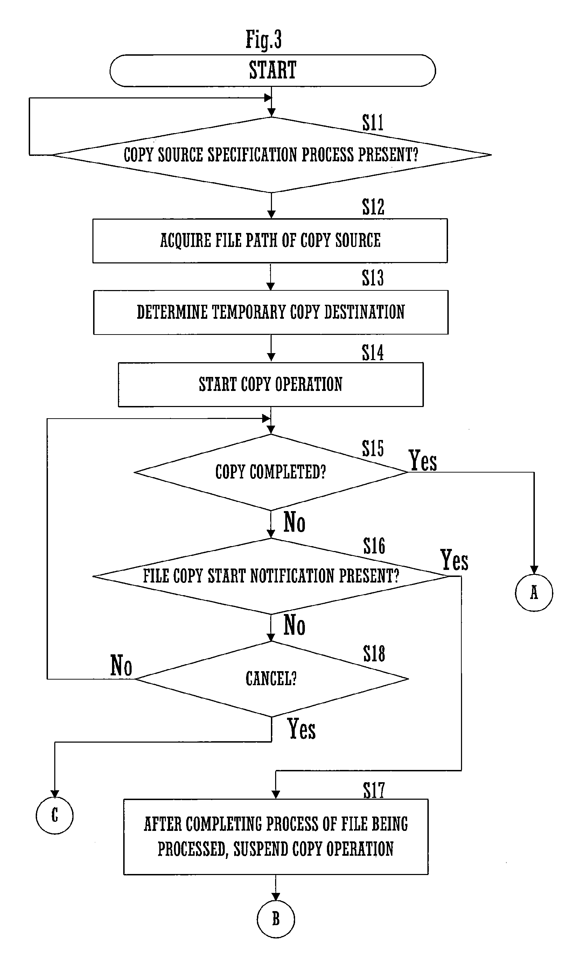

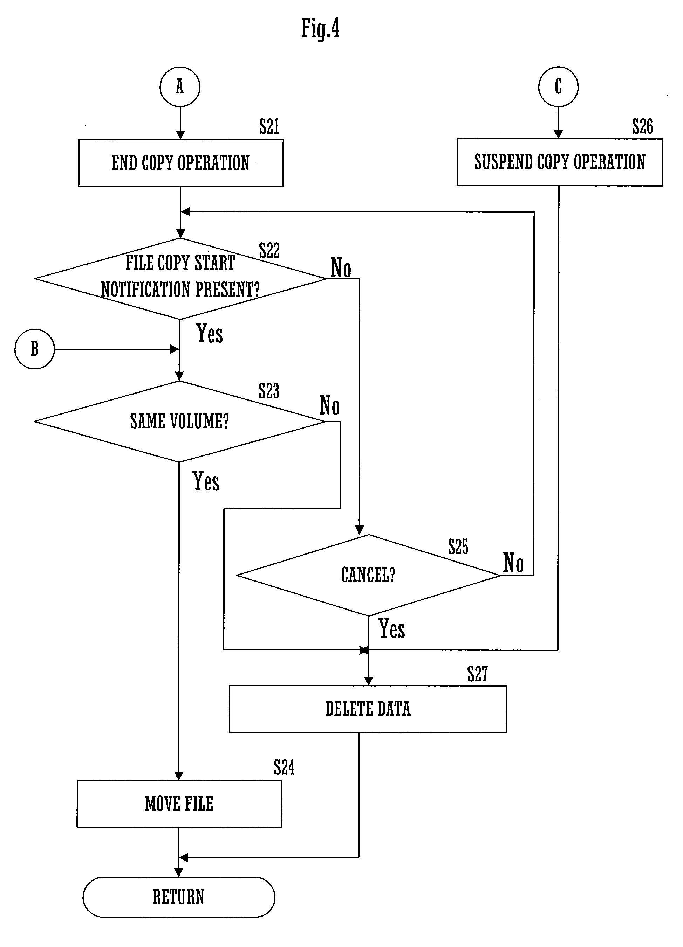

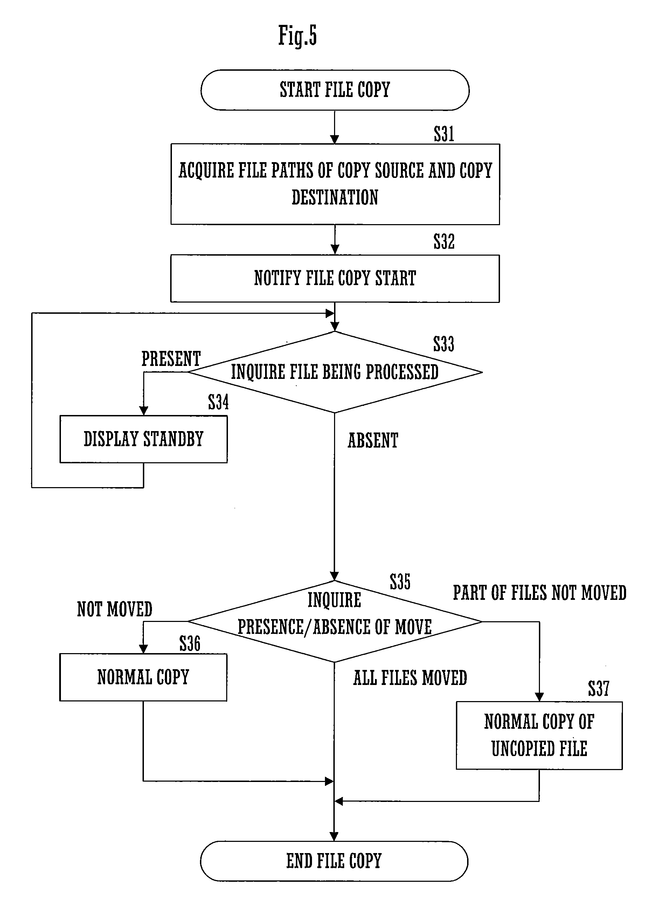

Next, with reference to the flowcharts of FIG. 3 to FIG. 5, the above mentioned operations will be described in detail. FIG. 3 and FIG. 4 are flowcharts illustrating an operation performed by the resident module 72, and FIG. 5 is a flowchart illustrating an operation performed by the file copy module 71.

The resident module 72 stands by until detecting a copy source specification process (S11). Detection of the copy source specification process, as described above, is performed by the monitoring of the clipboard 73 or the notification of a drag operation from the OS 70.

The resident module 72, when detecting the copy source specification process, acquires a file path of a move source or a copy source by the acquisition of a file path saved in the clipboard 73, or a file path acquired through an API notified from the OS 70 (S12), and determines a temporary copy destination (S13). According to the preferred embodiment of the present invention, a file of the move source or the copy source is present in the volume 53 of the internal drive and the temporary folder of the volume 2 of the external drive is set as a temporary copy destination. In a case in which a temporary folder is absent in a volume set as a temporary copy destination, a temporary folder is created in a process (S13) of determining this temporary copy destination.

Subsequently, the resident module 72, based on the file path of the move source or the copy source acquired in S12, starts an operation of copying the file to a temporary folder (S14). It should be noted that, in the copy source specification process, not only one file but a plurality of files may possibly be selected simultaneously. In such a case, the resident module 72, based on the file path of the move source or the copy source acquired previously, starts an operation of copying all the files to the temporary folder.

Then, the resident module 72 confirms whether the copy of all the files selected in the copy source specification process to the temporary folder has been completed (S15). The resident module 72, when determining that the copy of all the files to the temporary folder has been completed, as illustrated in FIG. 4, ends the copy operation (S21) and confirms whether or not there has been a file copy start notification from the file copy module 71 (S22).

The file copy start notification includes information on a file path of a move source or a copy source and a move destination or a copy destination. The resident module 72 confirms whether or not the volume of the file path of the move destination or the copy destination, and the volume of the temporary copy destination show the same volume (S23). The resident module 72, when determining that the volume of the file path of the move destination or the copy destination and the volume of the temporary copy destination show the same volume, performs a move process of moving the copied file of the temporary copy destination to the move destination or the copy destination included in the file copy start notification (S24), and returns to the initial process (S11).

In addition, the resident module 72, in the process of step S15 of FIG. 3, when determining that the copy of all the files selected in the copy source specification process to the temporary folder has not been completed and confirming that there has been a file copy start notification (S16 : Yes), after the copy of the files being copied to the temporary folder is completed, suspends a copy operation (S17). Then, the resident module 72 confirms whether or not the volume of the file path of the move destination or the copy destination included in the file copy start notification, and the volume of the temporary copy destination show the same volume (S23), and, when determining that the volume of the file path of the move destination or the copy destination and the volume of the temporary copy destination show the same volume, performs a process of moving the file copied to the temporary copy destination to the move destination or the copy destination (S24), and returns to the initial process (S11). It is to be noted that the file that has been selected in the copy source specification process and that has not moved or copied by the resident module 72 is processed by the file copy module 71.

Moreover, the resident module 72, in the process of step S15 of FIG. 3, in a situation in which the copy of all the files selected in the copy source specification process to the temporary folder has not been completed, in a case in which there has not been a file copy start notification (S16: No), confirms whether or not the move or copy of a file has been canceled (S18). The resident module 72 determines that the move or copy of a file has been canceled, for example, in a case in which the file path of the clipboard has been updated or in a case in which a drag or drop operation has been stopped (in a case of being dropped within the same folder).

The resident module 72, when determining that the move or copy of a file has not been canceled, repeats the steps from the determination in step S15. The resident module 72, when determining that the move or copy of a file has been canceled, as illustrated in FIG. 4, suspends a file copy operation (S26), and deletes the copied file of the temporary copy destination (S27).

Furthermore, the resident module 72, in the determination of step S22, also when determining that there has been no a file copy start notification, confirms whether or not the move or copy of a file has been canceled (S25). The resident module 72, when determining that the move or copy of a file has not been canceled, repeats the steps from the determination in step S22, and, when determining that the move or copy of a file has been canceled, deletes the copied file of the temporary copy destination (S27).

Additionally, the resident module 72, in the determination of step S23, in a case in which the volume of the file path of the move destination or the copy destination included in the file copy start notification, and the volume of the temporary copy destination do not show the same volume, also deletes the copied file of the temporary copy destination (S27).

It should be noted that, in step S18 or S25, when the file path of the clipboard 73 is updated and the move or copy of a file is canceled, the resident module 72 determines that the copy source specification process has been executed in step S11, and starts a process of copying the file of the file path of a newly acquired move source or copy source to the temporary folder.

Subsequently, in FIG. 5, the operation of the file copy module 71 is described. The file copy module 71 starts the operation illustrated in FIG. 5 when the file copy start process is performed.

The file copy module 71, when the file copy start process is performed, acquires a file path of a move source or a copy source and a move destination or a copy destination (S31), and issues a file copy start notification to the resident module 72 (S32).

Then, the file copy module 71 inquires whether or not there is a file being processed in the resident module 72 (S33). The resident module 72, in a case in which there is a file being copied in the temporary copy destination, sends a reply that a file being processed is "present," and, in a case in which there is no files being copied, sends a reply that a file being processed is "absent".

The file copy module 71, when receiving a reply that a file being processed is "present" from the resident module 72, performs a standby display such as "preliminary write end being processed" to a user (S34), and stands by until the process ends (returns to the determination in step S33).

On the other hand, the file copy module 71, when receiving a reply that a file being processed is "absent" from the resident module 72, inquires of the resident module 72 about whether or not the file is moved from the temporary copy destination to the move destination or the copy destination included in the file copy start notification (S35). When there is a reply from the resident module 72 that all the files selected in the copy source specification process have been moved from the temporary copy destination to the move destination or the copy destination, the file copy module 71 ends the operation. When there is a reply from the resident module 72 that no files are moved from the temporary copy destination to the move destination or the copy destination, the file copy module 71 performs a normal copy process (S36). That is, the file copy module 71 reads a file from the file path of the move source or the copy source and performs a process of writing the file into the file path of the move destination or the copy destination.

Furthermore, in a case in which there is a reply from the resident module 72 that only a part of the files selected in the copy source specification process have been moved from the temporary copy destination to the move destination or the copy destination, and all the files selected in the copy source specification process have not been moved or copied, the file copy module 71, among the files selected in the copy source specification process, performs the normal copy process with respect to the files that have not been moved by the resident module 72 from the temporary copy destination to the move destination or the copy destination (S37).

As described above, in the information processing apparatus according to the preferred embodiment of the present invention, since the write process of writing a file into a volume of a move destination or a copy destination is started before a user performs a file copy start process, time required for a move or copy of a file can be reduced. In a case in which all the files selected in the copy source specification process have been written into the temporary folder, at a time when a user performs the file copy start process, the move or copy process is completed immediately, and also in a case in which a part of the files selected in the copy source specification process have been written into the temporary folder, the move or copy process is completed immediately with respect to a written file.

It is to be noted that, while, according to the preferred embodiment of the present invention, the file of the move source or the copy source is present in the volume 53 of the internal drive and the temporary folder of the volume 2 of the external drive is set as the temporary copy destination, in a case in which the file of the move source or the copy source is present in the volume of the external drive, the temporary folder of the volume of the internal drive may preferably be set as a temporary copy destination.

Moreover, the preferred embodiment of the present invention is not limited to this case but may also be applied to a case in which an external drive is absent and only an internal drive is present and thus only one volume is present. In a case in which only one volume is present, a temporary folder is created in the volume of the internal drive, and a file selected in the copy source specification process is copied to the temporary folder. It should also be noted that copying to the temporary folder may be limited to be performed only when the copy source specification process is performed by a copy source specification operation, such as the execution of a "copy" command, the keyboard input of CTRL+C, or the drag operation while pressing the CTRL key.

Furthermore, there may be a case in which an external drive is absent and a plurality of volumes of an internal drive are present. There may also be a case in which the number of volumes of an internal drive is one and a plurality of volumes of an external drive are present. There still may be a case in which a plurality of volumes of an internal drive are present and a plurality of volumes of an external drive are present, and the like. In these cases, the volume of a temporary copy destination may be determined as follows.
(1) The temporary folders of all the volumes other than the volume to which the file path of a move source or a copy source of a file belongs are set as a temporary copy destination.
(2) The temporary folders of all the volumes including the volume to which the file path of a move source or a copy source of a file belongs are set as a temporary copy destination.
   Of these, copying to the temporary folder of the volume to which the file path of the move source or the copy source of the file of the above (2) belongs may be limited to be performed only when the copy source specification process is performed by a copy source specification operation and may not be performed when a move source specification process is performed.
(3) Only a volume of a drive manufactured by a specific manufacturer is set as a temporary copy destination.
(4) Priority is regulated in accordance with the type of I/F.
   For example, when the volume of a drive connected through a USB and the volume of a drive connected through an eSATA are present, either one of the volumes of the drives is preferentially set as a temporary copy destination. In addition, in a case in which the volumes of a plurality of drives connected through I/F with the same USB standard but with different speed, like a USB 2.0 and a USB 3.0, are present, either one of the volumes of the drives is preferentially set as a temporary copy destination.
   Moreover, for example, in a case in which a file path of a move source or a copy source of a file shows the volume of a drive that does not support a hot plug, the temporary folder of the volume of a drive that supports a hot plug is set as a temporary copy destination. Alternatively, in a case in which a file path of a move source or a copy source of a file shows the volume of a drive that supports a hot plug, the temporary folder of the volume of a drive that does not support a hot plug is set as a temporary copy destination.
(5) Priority is regulated in accordance with the kind of a device.
   For example, in a case in which the volumes of an HDD and an external drive composed of a flash memory are connected, either one of the volumes of the drives is preferentially set as a temporary copy destination.
(6) A user is allowed to set priority in advance using a dedicated configuration utility.
   It should be noted that, among the methods of the above (1) to (6), any one of the methods may be used alone or, when it is possible to combine some methods, a plurality of the methods may be used combined.

A user may also be allowed to manually specify a volume to be as a temporary copy destination in advance using the dedicated configuration utility, or may be allowed to specify a folder of a temporary copy destination.

While, in this preferred embodiment of the present invention, the copy source specification process includes the execution of a "cut" command, the keyboard input of CTRL+X, the execution of a "copy" command, the keyboard input of CTRL+C, or a drag operation, in a case in which a move or copy of a file can be predicted a time when a file is selected mainly by using file operation application software, copying to the temporary folder may be started in a process of selecting a file as the copy source specification process. In addition, at a time when a directory (folder) in which a file to be operated is present is selected, copying a file in the directory (current directory) to the temporary folder may be started in a process of selecting a directory (folder) as the copy source specification process.

In this preferred embodiment of the present invention, the volume of a move destination or a copy destination is determined at a time of the file copy start process and has not been determined at a time of detecting the copy source specification process. However, if the volume of a move destination or copy destination can be predicted at the time of detecting the copy source specification process, copying can be performed more efficiently. Therefore, in Windows (registered trademark), for example, when a file is selected, a "menu" is displayed by a right-click of a mouse and items such as "cut" and "copy" are displayed, so that a preferred embodiment in which an item to select a volume is added to this "menu" may be also possible. For example, an item named as "high-speed copy" is added, and, when the item is selected, a volume list will be displayed and a volume can be selected from the list. Then, if a user selects a volume, similarly to a case in which the item of "copy" is selected, the copy source specification process is detected and the temporary folder of a specified volume is set as a temporary copy destination. It is to be noted that, in such a case, a dialog box is displayed immediately at a time when a volume is selected, and a folder list of the volumes selected in the dialog box may be displayed and may enable a user to select a folder as an actual copy destination.

In this preferred embodiment of the present invention, while the resident module 72, after completing a copy process when a file copy start notification is received, suspends the preliminary write process, copying to the temporary folder of a volume different from the volume of a move destination or a copy destination, included in the file copy start notification, may be stopped immediately.

This preferred embodiment of the present invention shows an example in which the preliminary write process is continued until all files of the file path of the copy source specification process are copied to a temporary copy destination (except for a case in which there is a file copy start notification or a case in which there is a cancellation process), all the files are not necessarily copied to the temporary copy destination. If the size (amount of data) of the file to be copied to a temporary copy destination becomes large and processing time becomes long, the load on a PC or a storage device will be high. Therefore, for example, an upper limit on the size (amount of data) of the file to be copied to a temporary copy destination may be set and, at a time when the amount of copied data reaches the upper limit, further files may be prevented from being copied. Alternatively, an upper limit on the processing time may be set and, at a time when an elapsed time after starting copying to a temporary copy destination reaches the upper limit of the processing time, further files may be prevented from being copied. It should be noted that a user may use a utility and may be able to specify whether or not a file copy should be limited by the upper limit of an amount or the upper limit of processing time.

While, in this preferred embodiment of the present invention, normal copy (S36) performed by the file copy module 71 is a normal copy process of reading a file from a move source or a copy source and writing the file into a move destination or a copy destination, in a case in which the volume of the move destination or the copy destination differs from the volume of a temporary copy destination, a copied file of the temporary copy destination may not be deleted in S27 and the file may be copied from the temporary copy destination to the move destination or the copy destination, and then the file in the temporary copy destination may be deleted after the file copy ends. In a case in which read performance with respect to the volume of the move source or the copy source of a file is low, and read performance with respect to the volume in which a temporary copy destination is provided is high, a volume with higher-speed read performance can also be set as a read source, so that time required for a move or copy of a file can be reduced.

It should be noted that, while, in this preferred embodiment of the present invention, Windows (registered trademark) has been described as an OS, other OSs (a UNIX (registered trademark) based OS and the like, for example) can also realize the information processing apparatus of the present invention.

### Reference Signs List

- 1: PC
- 2: Volume of an external drive
- 51: USB I/F
- 52: Control unit
- 53: Volume of an internal drive
- 54: User I/F
- 70: OS
- 7: Explorer
- 71: File copy module
- 72: Resident module
- 73: Clipboard

## Claims

1. An information processing apparatus comprising:
a control unit that reads data from a storage device and controls writing of data into the storage device; and
a reception unit that receives an operation of a user, wherein the control unit performs a preliminary write process of, before a timing at which the reception unit receives an operation for specifying a move destination of data or a copy destination of data, reading the data and writing the data into a predetermined area.

2. The information processing apparatus according to claim 1, wherein the control unit, when the reception unit receives an operation for specifying a move source of data or a copy source of data, performs the preliminary write process.

3. The information processing apparatus according to claim 1, wherein the control unit, when the reception unit receives an operation for selecting data, predicts a move of the data or a copy of the data is started thereafter, reads the data, and performs the preliminary write process.

4. The information processing apparatus according to any one of claims 1 to 3, wherein the control unit, when the reception unit receives the operation for specifying a move destination of data or a copy destination of data, performs a move process of moving the data that has been written in the preliminary write process from the predetermined area to the received move destination of the data or to the received copy destination of the data.

5. A program executed by an information processing apparatus, wherein the program causes the information processing apparatus to execute a preliminary write process of, before a timing at which the program receives an operation for specifying a move destination of data or a copy destination of data, reading the data and writing the data into a predetermined area.

6. The program according to claim 5, wherein the program, when receiving an operation for specifying a move source of data or a copy source of data, causes the information processing apparatus to execute the preliminary write process.

7. The program according to claim 5, wherein the program, when receiving an operation for selecting data, predicts a move of the data or a copy of the data is started thereafter, reads the data, and causes the information processing apparatus to execute the preliminary write process.

8. The program according to any one of claims 5 to 7, wherein the program, when receiving the operation for specifying a move destination of data or a copy destination of data, causes the information processing apparatus to execute a move process of moving the data that has been written in the preliminary write process from the predetermined area to the received move destination of the data or to the received copy destination of the data.
